(19) Europäisches Patentamt
European Patent Office
Office européen des brevets

(11) **EP 3 428 212 A1**

(12) **EUROPÄISCHE PATENTANMELDUNG**

(43) Veröffentlichungstag:
**16.01.2019 Patentblatt 2019/03**

(21) Anmeldenummer: **17180818.1**

(22) Anmeldetag: **11.07.2017**

(51) Int Cl.:
**C08G 18/76** (2006.01)　　**C08G 18/48** (2006.01)
**C08K 5/5399** (2006.01)　　**C08L 75/08** (2006.01)
**C08J 9/00** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **WEICHSCHAUMSTOFF MIT HALOGENFREIEM FLAMMSCHUTZ**

(57)　　Die vorliegende Erfindung betrifft flammgeschützte Polyurethan-Weichschaumstoffe mit Phosphazen, sowie Verfahren zur Herstellung von PUR-Weichschaumstoffen durch die Umsetzung von Komponente **A** enthaltend

**A1**
eine Isocyanat-reaktive Komponente,

**A2**
Treibmittel, enthaltend Wasser,

**A3**
ggf. Hilfs- und Zusatzstoff,

**A4**
Flammschutzmittel,
mit
**B**
eine Isocyanatkomponente,
dadurch gekennzeichnet, dass das Flammschutzmittel **A4** ein Phosphazen gemäß der Formel (I) enthält

$$[P_mN_mX_kY_{2m-k}] \qquad (I),$$

wobei,
X, Y
unabhängig voneinander für O-Aryl oder NR-Aryl steht,
R
aus der Gruppe von H, C1-C4 Alkyl und Aryl gewählt ist, und
m
für eine Zahl von 1 bis 5, besonders bevorzugt 3 oder 4, steht,
k
abhängig von m ist und für eine Zahl von 0 bis 2m steht.

EP 3 428 212 A1

**Beschreibung**

Die vorliegende Erfindung betrifft flammgeschützte und offenporige Polyurethan-Weichschaumstoffe (im Folgenden auch als "PUR-Weichschaumstoffe" bezeichnet) mit Phosphazen, sowie Verfahren zu ihrer Herstellung und die Verwendung von Phosphazen als Flammschutzmittel in System zur Herstellung von PUR-Weichschaumstoffen.

So wie alle organischen Polymere sind auch PUR-Weichschaumstoffe brennbar, wobei die große Oberfläche pro Masseneinheit in Schaumstoffen dieses Verhalten noch verstärkt. PUR-Weichschaumstoffe werden beispielsweise in der Möbelindustrie als Sitzpolster oder allgemein als Lärm- und Wärmedämmmaterialen eingesetzt. In vielen Einsatzgebieten von PUR-Weichschaumstoffen ist daher eine Brandschutzausrüstung durch zugesetzte Flammschutzmittel erforderlich. Es gibt dabei Flammschutzmittel, die die Flamme in der Gasphase ersticken und es gibt Flammschutzmittel, die die Oberfläche des polymeren Werkstoffes schützen, indem sie die Verkohlung fördern oder einen glasartigen Überzug bilden. Als Flammschutzmittel werden halogenhaltige Verbindungen sowie Stickstoff- und Phosphorverbindungen bevorzugt eingesetzt. Verbindungen, die Halogene enthalten, und niedervalente Phosphorverbindungen gelten als typische Vertreter der Flammschutzmittel, die Flammen ersticken. Höhervalente Phosphorverbindungen sollen eine katalytische Spaltung der Polyurethane bewirken und dadurch zur Bildung einer festen, polyphosphathaltigen und verkohlten Oberfläche führen. Diese Intumeszenzschicht schützt das Material vor weiterer Verbrennung (G.W. Becker, D. Braun: Polyurethane. In: G. Oertel (Ed.), Kunststoff Handbuch, München, Carl Hanser Verlag, 1983, 2, 104-1-5).

Typische Flammschutzmittel sind z.B. Melamin oder Trischlorpropylphosphat (TCPP). Feststoffe wie Melamin haben den Nachteil in der Reaktionsmischung zu sedimentieren. Durch das Einbringen von unlöslichen Feststoffen in die Reaktionsmischung werden die erhaltenen Schaumstoffe hart. Das ist oft schwer zu kompensieren. Flüssige Flammschutzmittel wie TCPP haben diesen Nachteil nicht. Im Gegenteil haben Verbindungen wie TCPP den Vorteil, relativ flüchtig zu sein und so in die in einer Flamme ablaufende Radikalkettenreaktion eingreifen zu können. Dies führt dazu, dass die Temperatur der Flamme verringert wird, was wiederum die Zersetzung des entflammten Materials reduziert.

Ein Nachteil insbesondere der halogenhaltigen Vertreter dieser Klassen ist allerdings, dass sie relativ flüchtig sind und so aus dem Schaumstoff migrieren können (J.C. Quagliano, V.M. Wittemberg, I.C.G. Garcia: Recent Advances on the Utilization of Nanoclays and Organophosphorus Compounds in Polyurethane Foams for Increasing Flame Retardancy. In: J. Njuguna (Ed.), Structural Nanocomposites, Engineering Materials, Berlin Heidelberg, Springer Verlag, 2013, 1, 249-258) und bei der Verwendung im Verbrennungsprozess korrosive Halogenwasserstoffsäure entsteht.

Aufgrund der zunehmenden Verbreitung von organischen Halogenverbindungen mit teilweise gesundheitsschädlicher Wirkung in der Umwelt richtet sich das Interesse auf halogenfreie Alternativen, z.B. auf halogenfreie Phosphatester und Phosphitester (S.V. Levchik, E.D. Weil: A Review of Recent Progress in Phosphorus-based Flame Retardants, J. Fire Sci., 2006, 24, 345-364) und auf roten Phosphor.

Aber auch diese halogenfreien Alternativen haben Nachteile: Teilweise sind sie empfindlich gegenüber Hydrolyse unter den für PUR-Schaumstoffsysteme typischen alkalischen Bedingungen, oder die Wirksamkeit ist nicht zufriedenstellend. Roter Phosphor weist Nachteile auf, z.B. im Hinblick auf schnelle Absorption von Feuchtigkeit und schnelle Oxidation, was zu einem Verlust des Flammschutzes und ggf. zur Bildung giftiger Phosphine führt, und neigt außerdem zu Pulverexplosionen. Oft wird roter Phosphor mikroverkapselt, um diese Probleme zu beseitigen (L. Chen, Y.-Z. Wang: A review on flame retardant technology in China. Part 1: development of flame retardants, Polym. Adv. Technol., 2010, 21, 1-26).

Phosphazene sind hybride anorganisch/organische Materialien, die als lineare und cyclische Molekülstrukturen vorkommen (S.-Y. Lu, I. Hammerton: Recent developments in the chemistry of halogen-free flame retardant polymers, Prog. Polym. Sci., 2002, 27, 1661-1721). Der Einsatz von cyclischen Phosphazenen als Flammschutzmittel wurde z.B. für thermoplastische Polyurethane in JP 51037151 A2, für Leiterplatten in JP 2011028129 A2, für Heißklebstoffen in JP 2013001833 A2, für Textilbeschichtung in JP 2014141598 A2 und für Fasern in WO 2007/074814 A1 beschrieben.

Polyurethan-Hartschaumstoffe wurden mit verschiedenen, meist NCO-reaktiven Phosphazenen versetzt, um eine höhere thermische Stabilität zu erhalten (CN 103992353 A und CN 102816186 A).

Polyurethan-Weichschaumstoffe wurden bereits mit NCO-reaktiven Phosphazenen vernetzt. Dadurch wurde der Dampfdruck reduziert und das Additiv konnte nicht in der Gasphase wirken. So wird in JP 01190718 berichtet, dass Substanzen vom Typ $P_3N_3(NHCH_2OH)_m(OR)_{6-m}$ zu einer Verringerung der Rauchgasdichte, d. h. zu einer vollständigen Verbrennung von Polyurethan-Weichschaumstoffen führten. $P_3N_3(NH_2)_2(OC_6H_5)_4$ (Schmelzpunkt 104°C-105°C) wurde in einem Anteil von 25 Gew.-% in Komponente B in einen TDI-basierten Polyurethan-Weichschaumstoff eingebaut (Y. Kurachi, T. Okuyama, T. Oohasi; J. Mater. Sci., 1989, 24, 2761-2764) und führte zu einer geringen Verbesserung des LOI (**L**imiting **O**xygen **I**ndex).

Die verbesserten Brandeigenschaften der Polyurethan-Schaumstoffe in den vorher genannten Veröffentlichungen werden jedoch durch einen sehr hohen Gewichtsanteil an Phosphazen erhalten, bis zu einem kompletten Aufbau des Polyols durch Phosphazenderivate.

Weiterhin sind Phosphazene, die über Isocyanat-reaktive Gruppen in eine Polyurethanmatrix eingebaut werden können, nur über mehrere Stufen aufwendig herzustellen, weil sie Schutzgruppenstrategien nutzen (CN 102766167 A, CN 102766168 A und N.N. Reed, K. D. Janda: Stealth Star Polymers: A New High-Loading Scaffold for Liquid-Phase Organic Synthesis, Org. Lett., 2000, 2, 1311-1313).

Die Aufgabe der vorliegenden Erfindung ist es daher, die Herstellung von PUR-Weichschaumstoffen enthaltend halogenfreie Flammschutzmittel zu ermöglichen, wobei die Nachteile des Stands der Technik in Bezug auf das Verfahren und die hergestellten PUR-Weichschaumstoffe überkommen werden, insbesondere sollen die hergestellten PUR-Weichschaumstoffe trotzdem geringe Rohdichten und Stauchhärten, sowie einen guten Flammschutz aufweisen.

Diese Aufgabe konnte gelöst werden durch den erfindungsgemäßen Einsatz von Phosphazen gemäß der Formel (I) als Flammschutzmittelkomponente in der Herstellung von PUR-Weichschaumstoffen.

Gegenstand der Erfindung ist ein Verfahren zur Herstellung von offenporigen PUR-Weichschaumstoffen durch die Umsetzung einer Komponente **A** enthaltend

**A1**   eine Isocyanat-reaktive Komponente,

**A2**   Treibmittel, enthaltend Wasser,

**A3**   ggf. Hilfs- und Zusatzstoff

**A4**   Flammschutzmittel,

mit

**B**   eine Isocyanatkomponente

dadurch gekennzeichnet, dass das Flammschutzmittel **A4** ein Phosphazen gemäß der Formel (I) enthält

$$[P_mN_mX_kY_{2m-k}] \qquad (I),$$

wobei

X, Y   unabhängig voneinander für O-Aryl oder NR-Aryl steht,

R   aus der Gruppe von H, C1-C4-Alkyl und Aryl gewählt ist, und

m   für eine Zahl von 1 bis 5, bevorzugt 3 oder 4, steht,

k   abhängig von m ist und für eine Zahl von 0 bis 2m steht.

Überraschenderweise wurde gefunden, dass nicht nur die Brandschutzeigenschaften der erfindungsgemäßen PUR-Weichschaumstoffe mit Phosphazenen gemäß der Formel (I) als Flammschutzmittel verbessert werden, sondern auch die Dämpfung der PUR-Weichschaumstoffe vorteilhafter wird.

Bei einem offenporigen PUR-Weichschaumstoff handelt es sich im Sinne der Erfindung um einen PUR-Weichschaumstoff, welcher einen Anteil von mehr als 60 % offene Zellen besitzt.

Komponente **A1**

Als Isocyanat-reaktive Komponente **A1** wird mindestens ein Polyol ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Bevorzugt sind Polyesterpolyole und/oder Polyetherpolyole. Die einzelne Polyolkomponente kann bevorzugt eine Hydroxylzahl zwischen 20 bis 2000 mg KOH/g, insbesondere 25 bis 60 mg KOH/g und besonders bevorzugt 27 bis 37 mg KOH/g aufweisen. Vorzugsweise weist die einzelne Polyolkomponente ein zahlenmittleres Molekulargewicht von 2000 g/mol bis 15000 g/mol, insbesondere 3000 g/mol bis 12000 g/mol und besonders bevorzugt 3500 g/mol bis 6500 g/mol auf. Werden mehr als nur eine Isocyanat-reaktive Komponente verwendet, kann die Mischung bevorzugt eine Hydroxylzahl zwischen 20 bis 2000 mg KOH/g, insbesondere 25 bis 100 mg KOH/g aufweisen. Vorzugsweise kann die Mischung ein Äquivalentgewicht von 0,8 bis 2,2 kg/mol aufweisen.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Juni 2013).

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z. B. Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Milchsäure, Äpfelsäure, Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Copolymere des Propylenoxids mit Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mindestens 3 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S. 55 ff. (Kap. 4: Oligo-Polyols for Elastic Polyurethanes), S. 263 ff. (Kap. 8: Polyester Polyols for Elastic Polyurethanes) und insbesondere auf S. 321 ff. (Kap. 13: Polyether Polyols for Rigid Polyurethane Foams) und S. 419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024]-[0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Als Hydroxylgruppen-aufweisende Verbindungen können auch Polymerpolyole, PHD-Polyole und PIPA-Polyole in Komponente **A1** eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyhydrazodicarbonamid)-Polyole werden beispielsweise hergestellt durch in situ Polymerisation eines Isocyanats oder einer Isocyanat-Mischung mit einem Diamin und/oder Hydrazin (bzw. Hydrazinhydrat) in einem Polyol, bevorzugt einem Polyetherpolyol. Bevorzugt wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazinhydrat in einem Polyetherpolyol hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei PIPA-Polyolen handelt es sich um durch Polyisocyanat-Polyaddition mit Alkanolaminenmodifizierte Polyetherpolyole, wobei das Polyetherpolyol eine Funktionalität von 2,5 bis 4,0 und eine Hydroxylzahl von 3 mg KOH/g bis 112 mg KOH/g (Molekulargewicht 500 g/mol bis 18000 g/mol) aufweist. PIPA-Polyole sind in GB 2 072 204 A, DE 31 03 757 A1 und US 4 374 209 A eingehend beschrieben.

Isocyanat-reaktive Substanzen mit zellöffnender Wirkung können Copolymere aus Ethylenoxid und Propylenoxid mit einem Überschuss an Ethylenoxid oder aromatischen Diaminen wie Diethyltoluendiamin sein.

Neben den oben beschriebenen Isocyanat-reaktiven Verbindungen können in der Komponente **A1** beispielsweise Graft-Polyole, Polyamine, Polyaminoalkohole und Polythiole enthalten sein. Die beschriebenen Isocyanat-reaktiven Komponenten umfassen auch solche Verbindungen mit gemischten Funktionalitäten.

Für die Herstellung von Polyurethanschäumen im Kaltschaumverfahren werden bevorzugt mindestens zwei Hydroxylgruppen aufweisenden Polyether mit einer OH-Zahl von 20 bis 50 mg KOH/g eingesetzt, wobei die OH-Gruppen zu mindestens 80 Mol-% aus primärem OH-Gruppen bestehen (Bestimmung mittels $^1$H-NMR (z.B. Bruker DPX 400, Deuterochloroform)). Besonders bevorzugt beträgt die OH-Zahl 25 bis 40 mg KOH/g, ganz besonders bevorzugt 25 bis 35 mg KOH/g.

Gegebenenfalls werden zusätzlich in der Komponente **A1** Verbindungen mit mindestens zwei gegenüber Isocyanaten reaktionsfähigen Wasserstoffatomen und einer OH-Zahl von 280 bis 4000 mg KOH/g, bevorzugt 400 bis 3000 mg KOH/g, besonders bevorzugt 1000 bis 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden. Weitere Beispiele für Verbindungen, die als Kettenverlängerungsmittel oder Vernetzungsmittel verwendet werden können, werden in EP-A 0 007 502, Seite 16-17, beschrieben.

Die Komponente **A1** kann aus einer oder mehreren der oben genannten Isocyanat-reaktiven Komponenten bestehen.

## Komponente **A2**

Als Treibmittel **A2** kann chemisches und physikalisches Treibmittel eingesetzt werden. Als chemisches Treibmittel werden Substanzen bezeichnet die mit Isocyanatgruppen unter Bildung des Treibgases, wie beispielsweise im Falle von Wasser entsteht dabei Kohlendioxid und im Falle von z.B. Ameisensäure entsteht dabei Kohlendioxid und Kohlenstoffmonoxid, reagieren. Als chemisches Treibmittel können beispielsweise Wasser, Carbonsäuren, Carbamate und Gemische daraus verwendet werden. Als Carbonsäure wird bevorzugt mindestens eine Verbindung ausgewählt aus der Gruppe bestehend aus Ameisensäure, Essigsäure, Oxalsäure und Ricinolsäure eingesetzt. Besonders bevorzugt wird als chemisches Treibmittel nur Wasser eingesetzt.

Als physikalisches Treibmittel eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und isoButan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel **A2** wird mindestens eine Verbindung ausgewählt aus der Gruppe bestehend aus physikalische und chemische Treibmittel, eingesetzt. Bevorzugt besteht Komponente **A2** aus mindestens einem chemischen Treibmittel, besonders bevorzugt aus Wasser.

Komponente **A3**

Die als Komponente **A3** gegebenenfalls eingesetzte Hilfs- und Zusatzstoffe werden beispielsweise in der EP-A 0 000 389, Seiten 18-21, beschrieben. Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Beispielhaft können als Komponente **A3** Hilfs- und Zusatzstoffe wie Katalysatoren (Aktivatoren), Weichmacher, Antioxidantien, oberflächenaktive Substanzen (Tenside), wie Emulgatoren und Schaumstabilisatoren insbesondere solche mit niedriger Emission wie beispielsweise Produkte der Tegostab® LF2-Serie, Pigmente, Füllstoffe (wie beispielsweise Bariumsulfat, Kieselgur, Ruß- oder Schlämmkreide), Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Farbstoffe, Stabilisatoren gegen Alterungs- und Witterungseinflüsse, fungistatisch und bakteriostatisch wirkende Substanzen und Trennmittel, verwendet werden.

Als Katalysatoren können beispielsweise Amine, wie aliphatische tertiäre Amine (z. B. Triethylamin, Tetramethylbutandiamin) und cycloaliphatische tertiäre Amine (z. B. 1,4-Diaza(2,2,2)bicyclooctan), Aminoether, wie aliphatische Aminoether (z. B. Dimethylaminoethylether und N,N,N-Trimethyl-N-hydroxyethyl-bisaminoethylether) und cycloaliphatische Aminoether (z. B. N-Ethylmorpholin), Amidine, wie aliphatische Amidine und cycloaliphatische Amidine, Harnstoff, Derivate des Harnstoffs (z. B. Aminoalkylharnstoffe, siehe zum Beispiel EP-A 0 176 013, insbesondere (3-Dimethylaminopropylamin)-harnstoff), und Zinn-Katalysatoren (z. B. Dibutylzinnoxid, Dibutylzinndilaurat, Zinnoctoat) eingesetzt werden. Bevorzugt als Katalysator eingesetzt wird mindestens eine Verbindung ausgewählt aus der Gruppe enthaltend Harnstoff, Derivate des Harnstoffs, Amine und Aminoether. Bevorzugt werden keine Zinn-Katalysatoren eingesetzt.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethyl¬aminopropyl)-N-isopropanolamin, N,N,N-Trimethyl-N-hydroxyethyl-bisaminoethylether und 3-Dimethylaminopropylamin.

Diese besonders bevorzugten Katalysatoren haben den Vorteil, dass diese ein stark reduziertes Migrations- und Emissionsverhalten aufweisen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumstoffes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Montmorillonit und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Weiterhin kommen als Füllstoffe Substanzen in Betracht, die zur Herstellung von Dispersionen verwendet werden können. Beispielsweise Umsetzungsprodukte aus Isocyanaten mit einem Diamin und/oder Hydrazinhydrat, welche für die Bildung von PHD-Dispersionen eingesetzt werden. Diese Füllstoffe reagieren selbst nicht mit Isocyanatgruppen.

Die Komponente **A3** kann aus einer oder mehreren der oben genannten Hilfs- und Zusatzstoffe bestehen.

## Komponente **A4**

Gemäß der vorliegenden Erfindung werden als Flammschutzmittel **A4** Phosphazene gemäß der Formel (I) eingesetzt,

$$[P_m N_m X_k Y_{2m-k}] \qquad (I),$$

wobei

X, Y unabhängig voneinander für O-Aryl oder NR-Aryl steht,

R aus der Gruppe von H, C1-C4 Alkyl und Aryl gewählt ist, und

m für eine Zahl von 1 bis 5, besonders bevorzugt 3 oder 4, steht

k abhängig von m ist und für eine Zahl von 0 bis 2m steht.

Besonders bevorzugt sind X und Y in der Formel (I) O-Aryl-Gruppen, ganz besonders bevorzugt $O-C_6H_4CN$, $O-C_6H_4CH_3$ und $O-C_6H_5$.

Es können ein oder mehrere Phosphazene gemäß der Formel (I) als Flammschutzmittel **A4** eingesetzt werden, auch können zusätzlich zu den Phosphazenen gemäß der Formel (I) weitere Flammschutzmittel eingesetzt werden. Der Anteil des Phosphazens gemäß der Formel (I) am Flammschutzmittel **A4** kann z.B. 50 Gew.-% bis 100 Gew.-%, bevorzugt 80 Gew.-% bis 100 Gew.-% und besonders bevorzugt 100 Gew.-% betragen, jeweils bezogen auf die Gesamtmasse des Flammschutzmittels **A4.**

Der Anteil an Phosphazen gemäß der Formel (I) im Reaktionsgemisch, enthaltend die Komponenten **A1** bis **A4** (ohne Komponente **B**), kann z.B. 0,5 Gew.-% bis 40,0 Gew.-%, bevorzugt 1,0 Gew.-% bis 20,0 Gew.-%, besonders bevorzugt 2,0 Gew.-% bis 15,0 Gew.-%, betragen.

Als weitere Flammschutzmittel können beispielsweise Phosphate oder Phosphonate eingesetzt werden, wie z.B. Trikresylphosphat, Diphenylkresylphosphat (DPK), Triethylphosphat (TEP), Dimethylmethylphosphonat (DMMP), Diethano laminomethylphosphonsäurediethylester, Diethylethylphosphonat (DEEP) und/oder Dimethylpropylphosphonat (DMPP). Darüber hinaus sind weitere geeignete Flammschutzmittel beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Bevorzugt eingesetzt werden halogenfreie Flammschutzmittel, besonders bevorzugt mindestens eine Verbindung ausgewählt aus der Gruppe bestehend aus halogenfreie Phosphate und halogenfreie Phosphonate, besonders bevorzugt mindestens eine Verbindung ausgewählt aus der Gruppe bestehend aus Trikresylphosphat, Diphenylkresylphosphat (DPK), Triethylphosphat (TEP), Dimethylmethylphosphonat (DMMP), Diethano laminomethylphosphonsäurediethylester, Diethylethylphosphonat (DEEP) und Dimethylpropylphosphonat.

## Komponente **B**

Als Komponente **B** werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (II)

$$Q(NCO)_n \qquad (II)$$

in der

n = für eine Zahl zwischen 2 bis 6, bevorzugt 2 bis 3, steht und

Q einen aromatischen oder aliphatischen Kohlenwasserstoffrest mit 2 bis 40, vorzugsweise 7 bis 20 C-Atomen, einen cycloaliphatischen Kohlenwasserstoffrest mit 4 bis 15, vorzugsweise 6 bis 13 C-Atomen oder einen araliphatischen Kohlenwasserstoffrest mit 8 bis 15, vorzugsweise 8 bis 13 C-Atomen bedeuten.

Beispielsweise handelt es sich um Polyisocyanate, wie sie in der EP-A 0 007 502, Seite 7-8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate" oder "Prepolymere"), insbesondere solche modifizierten Polyisocyanate, die sich vom 2,4- und/oder 2,6-Toluylendiisocyanat bzw. vom 4,4'- und/oder 2,4'- und/oder 2,2'-Diphenylmethandiisocyanat ableiten. Vorzugsweise wird als Komponente **B** mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI", "pMDI"), besonders bevorzugt mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI" oder "pMDI") eingesetzt.

Die Gemische aus Diphenylmethandiisocyanat und Polyphenylenpolymethylenpolyisocyanat ("Mehrkern-MDI" oder "pMDI") haben einen bevorzugten Monomergehalt zwischen 50 und 100 Gew.-%, bevorzugt zwischen 60 und 95 Gew.-%, besonders bevorzugt zwischen 75 und 90 Gew.-%. Der NCO-Gehalt des verwendeten Polyisocyanates sollte vorzugsweise über 25 Gew.-%, bevorzugt über 30 Gew.-%, besonders bevorzugt über 31,4 Gew.-% liegen. Vorzugsweise sollte das eingesetzte MDI einen Gehalt an 2,4'-Diphenylmethandiisocyanat von mindestens 3 Gew.-%, bevorzugt mindestens 15 Gew.-% aufweisen.

Neben den vorstehend genannten Polyisocyanaten können anteilig auch modifizierte Diisocyanate mit Uretdion-, Isocyanurat-, Urethan-, Carbodiimid, Uretonimin, Allophanat, Biuret-, Amid-, Iminooxadiazindion- und/oder Oxadiazintrionstruktur sowie nichtmodifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$\text{Kennzahl} = (\text{Mole Isocyanatgruppen} / \text{Mole Isocyanat-reaktive Gruppen}) * 100$$

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 60 bis 250 führen, bevorzugt zwischen 70 und 130 und besonders bevorzugt zwischen 75 und 120.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Die Komponente **B** kann aus einer oder mehreren der oben genannten Isocyanatkomponenten bestehen.

Die Erfindung betrifft ebenfalls einen PUR-Weichschaumstoff der durch das erfindungsgemäße Verfahren hergestellt ist.

Die PUR-Weichschaumstoffe können als Form- oder auch als Blockschaumstoffe hergestellt werden. Vorzugsweise werden sie als Formschaumstoffe hergestellt.

Die Verfahren zur Herstellung von PUR-Weichschaumstoffen sind an sich bekannt und werden z.B. im Kunststoff-Handbuch, Band VII, herausgegeben von Vieweg und Höchtlen, Carl-Hanser-Verlag, München 1993, auf den Seiten 139-265, oder von N. Adam et. al. in Ullmann's Encyclopedia of Industrial Chemistry, 7th edition 2005 im Kapitel "Polyurethanes" beschrieben. PUR-Weichschaumstoffe können im Heiß- oder Kaltschaumverhalten hergestellt werden, bevorzugt ist das Kaltschaumverfahren.

Das erfindungsgemäße Verfahren zur Herstellung von PUR-Weichschaumstoffen aus den erfindungsgemäßen Komponenten führt zu PUR-Weichschaumstoffen mit gleichzeitig guten Flammschutz- und Dämpfungseigenschaften bei Verringerung der gesundheitlichen Nachteile im Vergleich zum Stand der Technik.

Gegenstand der Erfindung sind daher auch die mit den erfindungsgemäßen Komponenten hergestellten PUR-Weichschaumstoffe, und deren Verwendung zur Herstellung von Formteilen sowie die Formteile selbst.

Die nach der Erfindung erhältlichen PUR-Weichschaumstoffe finden beispielsweise Anwendung in Möbelpolsterungen, Textileinlagen, Matratzen, Automobilsitze, Kopfstützen, Armlehnen, Schwämme und Bauelemente, sowie Sitz- und Armaturverkleidungen, und weisen Kennzahlen von 50 bis 250, bevorzugt 70 bis 130, besonders bevorzugt 75 bis 115 auf.

Ein bevorzugtes erfindungsgemäßes Verfahren zur Herstellung der erfindungsgemäßen PUR-Weichschaumstoffe umfasst die Umsetzung von Komponente **A** enthaltend

**A1**    39,50 bis 99,28 Gew.-% (bezogen auf die Komponenten **A1** bis **A4**) eines Polyetherpolyols oder einer Mischung aus Polyetherpolyolen, bevorzugt Polymere auf Basis von Propylenoxid und Ethylenoxid mit einem mittleren Äquivalentgewicht von 0,8 bis 2,2 kg/mol und einer mittleren Funktionalität von 1,8 bis 6,2,

**A2**    0,2 bis 20,0 Gew.-% (bezogen auf die Komponenten **A1** bis **A4**) Wasser,

**A3**    0,02 bis 3,02 Gew.-% (bezogen auf die Komponenten **A1** bis **A4**) aliphatische Amine als Katalysatoren, bevorzugt solche, die OH- oder NH-Gruppen enthalten, sowie bis zu 30 Gew.-% (bezogen auf die Komponenten **A1** bis **A4**) an in **A1** stabil dispergierten und nicht Isocyanat-reaktiven Füllstoffen

**A4**    0,5 bis 8,0 Gew.-% (bezogen auf die Komponenten **A1** bis **A4**) Flammschutzmittel,

mit der Isocyanatkomponente **B,**
dadurch gekennzeichnet, dass das Flammschutzmittel **A4** ein Phosphazen, gemäß der Formel (I)

$$[P_mN_mX_xY_{2m-x}] \qquad (I)$$

enthält.

In einer weiteren bevorzugten Ausführungsform werden cyclische Phosphazene mit einem Schmelzpunkt eingesetzt, der unter der Temperatur liegt, die der Schaumstoff bei der Herstellung erreicht. Bevorzugt sind Phosphazene mit einem Schmelzpunkt unter 80°C.

In einer bevorzugten Ausführungsform werden als Komponente **B** Mischungen aus MDI- und TDI-Isomeren verwendete, wobei das Gewichtsverhältnis von MDI-Isomeren zu TDI-Isomeren zwischen 4:1 und 1:4 liegt. Bevorzugt enthält die Mischung aus MDI- und TDI-Isomeren 15 bis 75 Gew.-% 4,4-MDI, 0 bis 30 Gew.-% 2,4-MDI, 10 bis 30 Gew.-% polymeres MDI und Homologe, wobei die zu 100 Gew.-% fehlenden Anteile aus TDI-Isomere bestehen.

In einer weiteren bevorzugten Ausführungsform kann in der Komponente **A** und/oder B Polyhydrazodicarbonamid mit 1 bis 10 Gew.-%, bezogen auf das Gesamtgewicht der Komponenten **A** und **B,** vorliegen.

In einer ersten Ausführungsform betrifft die Erfindung ein Verfahren zur Herstellung von offenporigen PUR-Weichschaumstoffen durch die Umsetzung von Komponente **A** enthaltend

**A1**    eine Isocyanat-reaktive Komponente
**A2**    Treibmittel, enthaltend Wasser,
**A3**    ggf. Hilfs- und Zusatzstoff
**A4**    Flammschutzmittel

mit

**B**    eine Isocyanatkomponente

dadurch gekennzeichnet, dass das Flammschutzmittel A4 ein Phosphazen gemäß der Formel (I) enthält

$$[P_mN_mX_kY_{2m-k}] \qquad (I),$$

wobei

X, Y    unabhängig voneinander für O-Aryl oder NR-Aryl steht,
R    aus der Gruppe von H, C1-C4 Alkyl und Aryl gewählt ist, und
m    für eine Zahl von 1 bis 5, besonders bevorzugt 3 oder 4, steht,
k    abhängig von m ist und für eine Zahl von 0 bis 2m steht.

In einer zweiten Ausführungsform betrifft die Erfindung ein Verfahren nach der ersten Ausführungsform, dadurch gekennzeichnet, dass in der Isocyanat-reaktiven Komponente **A1** Polyetherpolyole mit einer Hydroxylzahl von 20 mg KOH/g bis 2000 mg KOH/g enthalten sind.

In einer dritten Ausführungsform betrifft die Erfindung ein Verfahren nach der ersten oder zweiten Ausführungsform, dadurch gekennzeichnet, dass die Isocyanat-reaktive Komponente **A1** ein PHD-Polyol enthält.

In einer vierten Ausführungsform betrifft die Erfindung ein Verfahren nach einer der Ausführungsformen 1-3, dadurch gekennzeichnet, dass das Treibmittel **A2** mindestens eine Verbindung enthält, die ausgewählt ist aus der Gruppe bestehend aus halogenfreie chemische Treibmittel, halogenfreie physikalische Treibmittel und (hydro)fluorierte Olefine.

In einer fünften Ausführungsform betrifft die Erfindung ein Verfahren nach einer der Ausführungsformen 1-4, dadurch gekennzeichnet, dass das Flammschutzmittel **A4** kein in die Polyurethanstruktur einbaubares Phosphazen gemäß der Formel (I) enthält.

In einer sechsten Ausführungsform betrifft die Erfindung ein Verfahren nach einer der Ausführungsformen 1-5, dadurch gekennzeichnet, dass das Flammschutzmittel **A4** 50 Gew.-% bis 100 Gew.-%, bezogen auf die Gesamtmasse des Flammschutzmittels **A4**, eines Phosphazens gemäß der Formel (I) enthält.

In einer siebten Ausführungsform betrifft die Erfindung ein Verfahren nach einer der Ausführungsformen 1-6, dadurch gekennzeichnet, dass der Gehalt an Phosphazen gemäß der Formel (I) 0,5 Gew.-% bis 40,0 Gew.-%, bezogen auf die Reaktionsmischung **A1** bis **A4** ohne **B,** beträgt.

In einer achten Ausführungsform betrifft die Erfindung ein Verfahren nach einer der Ausführungsformen 1-7, dadurch gekennzeichnet, dass das Flammschutzmittel **A4** mindestens eine Verbindung ausgewählt aus der Gruppe bestehend aus halogenfreie Phosphate und halogenfreie Phosphonate enthält.

In einer neunten Ausführungsform betrifft die Erfindung ein Verfahren nach einer der Ausführungsformen 1-8, dadurch gekennzeichnet, dass die Komponente **A** enthält

**A1** 39,50 bis 99,28 Gew.-% (bezogen auf die Komponenten **A1** bis **A4**) eines Polyetherpolyols oder einer Mischung aus Polyetherpolyolen bevorzugt auf Basis von Propylenoxid und Ethylenoxid mit einem mittleren Äquivalentgewicht von 0,8 bis 2,2 kg/mol und einer mittleren Funktionalität von 1,8 bis 6,2,

**A2** 0,2 bis 20,0 Gew.-% (bezogen auf die Komponenten **A1** bis **A4**) Wasser,

**A3** 0,02 bis 3,02 Gew.-% (bezogen auf die Komponenten **A1** bis **A4**) aliphatische Amine als Katalysatoren, bevorzugt solche, die OH- oder NH-Gruppen enthalten, sowie bis zu 30 Gew.-% (bezogen auf die Komponenten **A1** bis **A4**) an in **A1** stabil dispergierten und nicht Isocyanat-reaktiven Füllstoffen,

**A4** 0,5 bis 8,0 Gew.-% (bezogen auf die Komponenten **A1** bis **A4**) Flammschutzmittel,

dadurch gekennzeichnet, dass das Flammschutzmittel **A4** ein Phosphazen gemäß der Formel (I) enthält.

In einer zehnten Ausführungsform betrifft die Erfindung ein Verfahren nach einer der Ausführungsformen 1-9, wobei Komponente **B** mindestens eine Verbindung enthält, die ausgewählt ist aus der Gruppe bestehend aus 2,4-Toluylendiisocyanat, 2,6-Toluylendiisocyanat, 4,4'- Diphenylmethandiisocyanat, 2,4'- Diphenylmethandiisocyanat, 2,2'-Diphenylmethandiisocyanat, Polyphenylpo lymethylenpo lyisocyanat und Carbodiimidgruppen, Urethangruppen, Allophanatgruppen, Isocyanuratgruppen, Harnstoffgruppen oder Biuretgruppen aufweisenden Polyisocyanaten, die sich vom 2,4- und/oder 2,6-Toluylendiisocyanat bzw. vom 4,4'- und/oder 2,4'- und/oder 2,2'-Diphenylmethandiisocyanat ableiten.

In einer elften Ausführungsform betrifft die Erfindung einen PUR-Weichschaumstoff, erhältlich nach dem Verfahren gemäß einer der Ausführungsformen 1-10.

In einer zwölften Ausführungsform betrifft die Erfindung einen PUR-Weichschaumstoff nach der elften Ausführungsform, dadurch gekennzeichnet, dass die Rohdichte zwischen 10 $kg/m^3$ und 20 $kg/m^3$ liegt.

In einer dreizehnten Ausführungsform betrifft die Erfindung einen PUR-Weichschaumstoff nach der elften Ausführungsform, dadurch gekennzeichnet, dass die Rohdichte zwischen 35 $kg/m^3$ und 80 $kg/m^3$ und die Isocyanat-Kennzahl zwischen 60 und 110 liegt.

In einer vierzehnten Ausführungsform betrifft die Erfindung einen PUR-Weichschaumstoff nach der elften Ausführungsform, dadurch gekennzeichnet, dass die Rohdichte zwischen 200 $kg/m^3$ und 300 $kg/m^3$ und die Isocyanat-Kennzahl zwischen 75 und 120 liegt.

In einer fünfzehnten Ausführungsform betrifft die Erfindung die Verwendung von PUR-Weichschaumstoffen nach den Ausführungsformen 11-14 zur Herstellung von Möbelpolsterungen, Textileinlagen, Matratzen, Automobilsitze, Kopfstützen, Armlehnen, Schwämme und Bauelemente, sowie Sitz- und Armaturenverkleidungen.

In einer sechzehnten Ausführungsform betrifft die Erfindung ein Verfahren nach einer der Ausführungsformen 1-10, dadurch gekennzeichnet, dass X und Y des Phosphazens gemäß der Formel (I) ausgewählt sind aus der Gruppe O-$C_6H_4$CN, O-$C_6H_4$CH$_3$ und O-$C_6H_5$.

In einer siebzehnten Ausführungsform betrifft die Erfindung ein Verfahren nach einer der Ausführungsformen 1-10, dadurch gekennzeichnet, dass das Flammschutzmittel **A4** nur Phosphazene gemäß der Formel (I) umfasst.

Die bevorzugten Ausführungsformen können einzeln oder auch miteinander verknüpft ausgeführt werden.

**Beispiele**

Die vorliegende Erfindung wird anhand der nachfolgenden Beispiele weiter erläutert, ohne jedoch darauf beschränkt zu sein.

A1-1 Glyzerin-gestartetes Polyalkylenoxid mit einem Molekulargewicht von 4800 g/mol, wird als Suspension mit A3-1 eingesetzt

A2-1 25 Gew.-% Harnstoff in Wasser

A3-1 Umsetzungsprodukt aus Toluylendiisocyanat (TDI) und Hydrazinhydrat, wird als Suspension mit A1-1 eingesetzt

A3-2 Mischung aus Jeffcat® ZF-10 (Huntsman) und Dabco® NE1070 (Air Products) im Gewichtsverhältnis 1:20

A3-3 Tegostab® B 8738 LF2, Polyetherdimethylsiloxan (Evonik)

A4-1 Rabitle® FP 200, cyclisches Phosphazen mit Phenoxy- und Methoxysubstituenten (Fushimi Pharmaceuticals, halogenfrei)

A4-2 Rabitle® FP 300-B, cyclisches Phosphazen mit Cyanophenoxysubstituenten (Fushimi Pharmaceuticals, halogenfrei)

A4-3 Rabitle® FP 366, cyclisches Phosphazen mit Propoxylsubstituenten (Fushimi Pharmaceuticals, halogenfrei)

A4-4 Rabitle® FP 390, cyclisches Phosphazen mit Toluyloxy- und Phenoxysubstituenten (Fushimi Pharmaceuticals, halogenfrei)

A4-5 Trischlorpropylphosphat, halogeniertes Flammschutzmittel

A4-6 Melamin, Halogenfreies, in allen anderen Komponenten unlösliches festes Flammschutzmittel

B-1 Desmodur® 44V20L, Isocyanat mit 31,5 Gew.-% NCO-Gruppen (Covestro)

B-2 Desmodur® T80, Isocyanat mit 48 Gew.-% NCO-Gruppen, Gemisch aus 80 Gew.-% 2,4-TDI und 20 Gew.-% 2,6-TDI (Covestro)

**Herstellung und Prüfung der PUR-Weichschaumstoffe**

Der Brandtest ist angelehnt an den britischen Standard BS 5852:1990-Teil 2 mit der Zündquelle 4 ("Crib"), wurde jedoch ohne textile Deckschicht durchgeführt.
Die Messung der Rohdichte wurde nach der DIN EN ISO 845 (Oktober 2009) durchgeführt.
Die Stauchhärte und die Dämpfung des PUR-Weichschaumstoffes wurden gemäß DIN EN ISO 3386-1 (September 2010) gemessen.
Zur Herstellung der PUR-Weichschaumstoffe wurde die notwendige Menge an Komponente **A** in einem Pappbecher mit Blechboden (Volumen: ca. 850 ml) vorgelegt und mit einem Rührwerk (Fa. Pendraulik) mit Standardrührscheibe (d = 64 mm) bei 4200 U/min 45 Sekunden lang mit Luft beladen. Danach wurde die Komponente **B** der Komponente **A** zugesetzt und die Mischung mit einem Rührwerk für 5 Sekunden intensiv vermischt. Die genaue Zusammensetzung der einzelnen Komponenten ist in Tabelle 1 dargestellt. Zur Bestimmung der charakteristischen Reaktionszeiten wurde zu Beginn der Vermischung eine Stoppuhr gestartet. Anschließend wurden ca. 93 Gramm des Reaktionsgemisches in eine 23 °C warme, mit Teflonfolie ausgekleidete Kastenform aus Aluminium mit einem Volumen von 1,6 dm$^3$ gegossen. Die Form wurde für 6 Minuten verschlossen und verriegelt. Die mechanischen Untersuchungen und Brandschutztests wurden an dem Formschaum, die Reaktionskinetik an dem frei aufschäumenden Reaktionsgemisch im Becher bestimmt.
Die Startzeit $t_c$ ist erreicht, wenn ein Expandieren des Gemisches beobachtet wird (Beginn der Reaktion von Isocyanat und Wasser). Die Abbindezeit $t_G$ bestimmt den Zeitpunkt, an dem durch das Auftupfen eines Holzsiedestäbchens auf die Oberfläche des aufsteigenden PUR-Weichschaumstoffes Fäden gezogen werden. Die Steigzeit $t_s$ ist erreicht, wenn die Expansion des PUR-Weichschaumstoffes endgültig beendet ist. Hierbei ist zu beachten, dass einige Systeme dazu neigen, ein Stück abzusacken und dann noch einmal weiter steigen.

Anhand von Tabelle 1, Teil "Angaben zur Kinetik und mechanische Eigenschaften" ist zu erkennen, dass die Beispiele 2 bis 5 mit Phosphazenen als Flammschutzmittel ähnliche Kernrohdichten (RD) wie die Beispiele 1 und 6 ohne Flammschutzmittel bzw. mit TCPP als Flammschutzmittel aufweisen. Der PUR-Weichschaumstoff aus Beispiel 7 mit Melamin als Flammschutzmittel weist eine erhöhte Rohdichte im Gegensatz zu den restlichen PUR-Weichschaumstoffen auf. Die weichmachende Wirkung ist jedoch nicht so ausgeprägt wie beim TCPP. Zu erkennen ist auch die Wirkung der Flammschutzmittel aus Beispiel 2 bis 6 als Weichmacher, welche dementsprechend besonders gut für PUR-Weichschaumstoffe geeignet sind. Das Beispiel 1 und insbesondere Beispiel 7 zeigen eine deutliche Härtung des PUR-Weichschaumstoffes. Die Dämpfung der PUR-Weichschaumstoffe von den Beispielen 3-5 ist günstiger als im Vergleich zu den PUR-Weichschaumstoffen ohne Flammschutzmittel, mit TCPP und mit Melamin.

Das Verhalten der PUR-Weichschaumstoffe im Brandtest ist in Tabelle 1, Teil "Angaben zum Verhalten im Brandtest" dargestellt. Aus den molaren Anteilen des eingesetzten Flammschutzmittels **A4** in den Beispielen 2 bis 7 wird die Effizienz des Flammschutzmittels beurteilt: Je höher diese Differenz ist, desto schneller erlischt die Flamme und desto effizienter ist das Flammschutzmittel.

Zu erkennen ist, dass die Beispiele 2 und 4, bei denen Phosphazene als Flammschutzmittel eingesetzt wurden die nicht die erfindungsgemäße Formel (I) aufweisen, nicht zu selbstverlöschenden PUR-Weichschaumstoffen führen. Weiterhin ist zu erkennen, dass Beispiel 7, welches mit einem nicht niedrigschmelzenden oder flüssigen Flammschutzmittel hergestellt wurde, zum gleichen Brandverhalten führt wie Beispiel 1. Besonders starke Verkürzung der Zeit bis zur Selbstverlöschung pro mmol eingesetztes Flammschutzmittel **A4** weist vor allem Beispiel 3 auf. Das Flammschutzmittel in Beispiel 5 wirkt ebenso gut oder leicht effizienter als das Flammschutzmittel in Beispiel 6, wobei Beispiel 6 ein halogeniertes Flammschutzmittel enthält und dementsprechend Nachteile z. B. durch korrosive Salzsäure in Rauchgasen aufweist.

**Tabelle 1: Zusammensetzung der Reaktionsmischungen**

| | | 1 | 2 | 3 | 4 | 5 | 6 | 7 |
|---|---|---|---|---|---|---|---|---|
| | 1) | Vergleich | Vergleich | Erfindung | Vergleich | Erfindung | Vergleich | Vergleich |
| A1-1 | Gew.-% | 80,75 | 77,65 | 77,65 | 77,65 | 77,65 | 77,65 | 77,65 |
| A2-1 | Gew.-% | 3,3 | 3,17 | 3,17 | 3,17 | 3,17 | 3,17 | 3,17 |
| A3-1 | Gew.-% | 14,25 | 13,5 | 13,5 | 13,5 | 13,5 | 13,5 | 13,5 |
| A3-2 | Gew.-% | 1,05 | 1 | 1 | 1 | 1 | 1 | 1 |
| A3-3 | Gew.-% | 0,65 | 0,63 | 0,63 | 0,63 | 0,63 | 0,63 | 0,63 |
| **Flammschutzmittel** | | | | | | | | |
| A4-1 | Gew.-% | | 4,2 | | | | | |
| A4-2 | Gew.-% | | | 4,2 | | | | |
| A4-3 | Gew.-% | | | | 4,2 | | | |
| A4-4 | Gew.-% | | | | | 4,2 | | |
| A4-5 | Gew.-% | | | | | | 4,2 | |
| A4-6 | Gew.-% | | | | | | | 4,2 |
| **Isocyanat** | | | | | | | | |
| B1 | g/100g **A** | 20,3 | 20,3 | 20,3 | 20,3 | 20,3 | 20,3 | 20,3 |
| B2 | g/100g **A** | 47,5 | 47,5 | 47,5 | 47,5 | 47,5 | 47,5 | 47,5 |
| Kennzahl | | 85 | 85 | 85 | 85 | 85 | 85 | 85 |
| | | 1 | 2 | 3 | 4 | 5 | 6 | 7 |
| | | Vergleich | Vergleich | Erfindung | Vergleich | Erfindung | Vergleich | Vergleich |
| Startzeit $t_c$ | s | 5 | 6 | 4 | 6 | 6 | 5 | 5 |
| Abbindezeit $t_G$ | s | 45 | 67 | 47 | 75 | 75 | 55 | 60 |
| Steigzeit $t_s$ | s | 90 | 10 | 87 | 112 | 126 | 105 | 105 |
| Rohdichte (RD) aus dem Kern des Formteils | kg/m$^3$ | 44 | 44 | 46 | 46 | 46 | 45 | 49 |

(fortgesetzt)

| | | 1 | 2 | 3 | 4 | 5 | 6 | 7 |
|---|---|---|---|---|---|---|---|---|
| | | Vergleich | Vergleich | Erfindung | Vergleich | Erfindung | Vergleich | Vergleich |
| Stauchhärte (CV40) bei 40% Stauchung | kPa | 3,7 | 2,9 | 3,1 | 3,2 | 3,0 | 2,6 | 5,0 |
| Dämpfung | | 24% | 23% | 22% | 22% | 22% | 24% | 26% |
| CV40/RD | $m^2/s^2$ | 86 | 66 | 67 | 71 | 65 | 58 | 102 |
| Anteil an Flammschutzmittel (A4) bezogen auf die Summe m(A1 bis A4)[2] | mmol/ kg | 0 | 99 | 55 | 105 | 64 | 127 | 350 |
| Schmelzpunkt des Flammschutzmittels | °C | - | < 20 | 72 | < 20 | < 20 | -52 | 350 (Zersetzung |
| $t_{SE}$ [3] | s | 87 | > 95 | 68 | > 95 | 83 | 81 | 87 |
| $\Delta T_{SE}$ [4] | s | 0 | Nicht selbstverlöschend | 19 | Nicht selbstverlöschend | 4 | 6 | 0 |
| $\Delta t_{SE}$ pro mmol Flammschutzmittel [5] | s/mmol | | | 0,35 | | 0,06 | 0,05 | 0 |

[1] Die Angabe der Gew.-% bezieht sich auf die Summe der Komponenten **A1** bis **A4** = 100 Gew.-%.

[2] Anteil der Stoffmenge (in mmol) des jeweils im Versuch eingesetzten Flammschutzmittels **A4** pro Summe der Massen (in kg) der eingesetzten Komponenten **A1** bis **A4**.

[3] $t_{SE}$: Die gemessene Zeit, bis die PUR-Weichschaumstoffprobe selbstverlöscht ($t_{SE}$) sind.

[4] $\Delta t_{SE}$: Die Differenz der Zeit $t_{SE}$ zur entsprechenden Zeit gemessen an der Referenzprobe ohne Flammschutzmittel sind in Sekunden angegeben.

[5] $\Delta t_{SE}$ pro mmol Flammschutzmittel: $\Delta t_{SE}$ bezogen auf die Stoffmenge (in mmol) des jeweils im Versuch eingesetzten Flammschutzmittels **A4**.

**Patentansprüche**

1. Verfahren zur Herstellung von offenporigen PUR-Weichschaumstoffen durch die Umsetzung von Komponente **A** enthaltend

   **A1** eine Isocyanat-reaktive Komponente
   **A2** Treibmittel, enthaltend Wasser,
   **A3** ggf. Hilfs- und Zusatzstoff
   **A4** Flammschutzmittel

   mit

   **B** eine Isocyanatkomponente

   **dadurch gekennzeichnet, dass** das Flammschutzmittel **A4** ein Phosphazen gemäß der Formel (I) enthält

   $$[P_mN_mX_kY_{2m-k}] \qquad (I),$$

   wobei

   X, Y unabhängig voneinander für O-Aryl oder NR-Aryl steht,
   R aus der Gruppe von H, C1-C4 Alkyl und Aryl gewählt ist, und
   m für eine Zahl von 1 bis 5, besonders bevorzugt 3 oder 4, steht,
   k abhängig von m ist und für eine Zahl von 0 bis 2m steht.

2. Verfahren nach Anspruch 1, **dadurch gekennzeichnet, dass** in der Isocyanat-reaktiven Komponente **A1** Polyetherpolyole mit einer Hydroxylzahl von 20 mg KOH/g bis 2000 mg KOH/g enthalten sind.

3. Verfahren nach einem der Ansprüche 1 oder 2, **dadurch gekennzeichnet, dass** die Isocyanat-reaktive Komponente **A1** ein PHD-Polyol enthält.

4. Verfahren nach einem der Ansprüche 1-3, **dadurch gekennzeichnet, dass** das Treibmittel **A2** mindestens eine Verbindung enthält, die ausgewählt ist aus der Gruppe bestehend aus halogenfreie chemische Treibmittel, halogenfreie physikalische Treibmittel und (hydro)fluorierte Olefine.

5. Verfahren nach einem der Ansprüche 1-4, **dadurch gekennzeichnet, dass** das Flammschutzmittel **A4** kein in die Polyurethanstruktur einbaubares Phosphazen gemäß der Formel (I) enthält.

6. Verfahren nach einem der Ansprüche 1-5, **dadurch gekennzeichnet, dass** das Flammschutzmittel **A4** 50 Gew.-% bis 100 Gew.-%, bezogen auf die Gesamtmasse des Flammschutzmittels **A4**, eines Phosphazens gemäß der Formel (I) enthält.

7. Verfahren nach einem der Ansprüche 1 - 6, **dadurch gekennzeichnet, dass** der Gehalt an Phosphazen gemäß der Formel (I) 0,5 Gew.-% bis 40,0 Gew.-%, bezogen auf die Reaktionsmischung **A1-A4** ohne **B,** beträgt.

8. Verfahren nach einem der Ansprüche 1-7, **dadurch gekennzeichnet, dass** das Flammschutzmittel **A4** mindestens eine Verbindung ausgewählt aus der Gruppe bestehend aus halogenfreie Phosphate und halogenfreie Phosphonate enthält.

9. Verfahren nach einem der Ansprüche 1-8, **dadurch gekennzeichnet, dass** die Komponente **A** enthält

   **A1** 39,50 bis 99,28 Gew.-% (bezogen auf die Komponenten **A1** bis **A4**) eines Polyetherpolyols oder einer Mischung aus Polyetherpolyolen bevorzugt auf Basis von Propylenoxid und Ethylenoxid mit einem mittleren Äquivalentgewicht von 0,8 bis 2,2 kg/mol und einer mittleren Funktionalität von 1,8 bis 6,2,
   **A2** 0,2 bis 20,0 Gew.-% (bezogen auf die Komponenten **A1** bis **A4**) Wasser,
   **A3** 0,02 bis 3,02 Gew.-% (bezogen auf die Komponenten **A1** bis **A4**) aliphatische Amine als Katalysatoren, bevorzugt solche, die OH- oder NH-Gruppen enthalten, sowie bis zu 30 Gew.-% (bezogen auf die Komponenten **A1** bis **A4**) an in **A1** stabil dispergierten und nicht Isocyanat-reaktiven Füllstoffen,

**A4** 0,5 bis 8,0 Gew.-% (bezogen auf die Komponenten **A1** bis **A4**) Flammschutzmittel,

**dadurch gekennzeichnet, dass** das Flammschutzmittel **A4** ein Phosphazen gemäß der Formel (I) enthält.

10. Verfahren nach einem der Ansprüche 1-9, wobei Komponente **B** mindestens eine Verbindung enthält, die ausgewählt ist aus der Gruppe bestehend aus 2,4-Toluylendiisocyanat, 2,6-Toluylendiisocyanat, 4,4'- Diphenylmethandiisocyanat, 2,4'-Diphenylmethandiisocyanat, 2,2'-Diphenylmethandiisocyanat, Polyphenylpolymethylenpolyisocyanat und Carbodiimidgruppen, Urethangruppen, Allophanatgruppen, Isocyanuratgruppen, Harnstoffgruppen oder Biuretgruppen aufweisenden Polyisocyanaten, die sich vom 2,4- und/oder 2,6-Toluylendiisocyanat bzw. vom 4,4'- und/oder 2,4'- und/oder 2,2'- Diphenylmethandiisocyanat ableiten.

11. PUR-Weichschaumstoff, erhältlich nach dem Verfahren gemäß einem der Ansprüche 1 bis 10.

12. PUR-Weichschaumstoff nach Anspruch 11, **dadurch gekennzeichnet, dass** die Rohdichte zwischen 10 kg/m$^3$ und 20 kg/m$^3$ liegt.

13. PUR-Weichschaumstoff nach Anspruch 11, **dadurch gekennzeichnet, dass** die Rohdichte zwischen 35 kg/m$^3$ und 80 kg/m$^3$ und die Isocyanat-Kennzahl zwischen 60 und 110 liegt.

14. PUR-Weichschaumstoff nach Anspruch 11, **dadurch gekennzeichnet, dass** die Rohdichte zwischen 200 kg/m$^3$ und 300 kg/m$^3$ und die Isocyanat-Kennzahl zwischen 75 und 120 liegt.

15. Verwendung von PUR-Weichschaumstoffen nach den Ansprüchen 11-14 zur Herstellung von Möbelpolsterungen, Textileinlagen, Matratzen, Automobilsitze, Kopfstützen, Armlehnen, Schwämme und Bauelemente, sowie Sitz- und Armaturenverkleidungen.

**Europäisches Patentamt**
**European Patent Office**
**Office européen des brevets**

# EUROPÄISCHER RECHERCHENBERICHT

Nummer der Anmeldung

EP 17 18 0818

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2016 102177 A (MITSUI CHEMICALS INC) 2. Juni 2016 (2016-06-02) * Vergleichsbeispiele 4-6; Absätze [0216], [0217]; Tabelle 4 * ----- | 1-15 | INV. C08G18/76 C08G18/48 C08K5/5399 C08L75/08 |
| X | JP 2016 102178 A (MITSUI CHEMICALS INC) 2. Juni 2016 (2016-06-02) * Vergleichsbeispiele 4-6; Absätze [0188], [0203]; Tabelle 3 * ----- | 1-15 | C08J9/00 |
| X | CN 106 009 620 A (DONGGUAN XIONGLIN NEW MAT TECH CO LTD) 12. Oktober 2016 (2016-10-12) * Anspruch 1 * ----- | 1-15 | |
| X | US 3 450 799 A (KOBER EHRENFRIED H ET AL) 17. Juni 1969 (1969-06-17) * Spalte 1, Zeilen 18-21; Anspruch 1 * ----- | 1-15 | |

**RECHERCHIERTE SACHGEBIETE (IPC)**

C08G
C08K
C08L
C08J
C07F

Der vorliegende Recherchenbericht wurde für alle Patentansprüche erstellt

| Recherchenort | Abschlußdatum der Recherche | Prüfer |
|---|---|---|
| München | 28. November 2017 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 0818

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2017

| Im Recherchenbericht angeführtes Patentdokument | Datum der Veröffentlichung | Mitglied(er) der Patentfamilie | Datum der Veröffentlichung |
|---|---|---|---|
| JP 2016102177 A | 02-06-2016 | KEINE | |
| JP 2016102178 A | 02-06-2016 | KEINE | |
| CN 106009620 A | 12-10-2016 | KEINE | |
| US 3450799 A | 17-06-1969 | US 3450799 A<br>US 3627841 A | 17-06-1969<br>14-12-1971 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 51037151 A
- JP 2011028129 A
- JP 2013001833 A
- JP 2014141598 A
- WO 2007074814 A1
- CN 103992353 A
- CN 102816186 A
- JP 01190718 A
- CN 102766167 A
- CN 102766168 A
- EP 2910585 A
- EP 1359177 A
- WO 2010043624 A
- EP 1923417 A
- US 4089835 A
- US 4260530 A
- GB 2072204 A
- DE 3103757 A1
- US 4374209 A
- EP 0007502 A
- EP 0000389 A
- EP 0176013 A

**In der Beschreibung aufgeführte Nicht-Patentliteratur**

- Polyurethane. **G.W. BECKER ; D. BRAUN.** Kunststoff Handbuch. Carl Hanser Verlag, 1983, vol. 2, 104-1, 5
- Recent Advances on the Utilization of Nanoclays and Organophosphorus Compounds in Polyurethane Foams for Increasing Flame Retardancy. **J.C. QUAGLIANO ; V.M. WITTEMBERG ; I.C.G. GARCIA.** Structural Nanocomposites, Engineering Materials. Springer Verlag, 2013, vol. 1, 249-258
- **S.V. LEVCHIK ; E.D. WEIL.** A Review of Recent Progress in Phosphorus-based Flame Retardants. *J. Fire Sci.,* 2006, vol. 24, 345-364
- **L. CHEN ; Y.-Z. WANG.** A review on flame retardant technology in China. Part 1: development of flame retardants. *Polym. Adv. Technol.,* 2010, vol. 21, 1-26
- **S.-Y. LU ; I. HAMMERTON.** Recent developments in the chemistry of halogen-free flame retardant polymers. *Prog. Polym. Sci.,* 2002, vol. 27, 1661-1721
- **Y. KURACHI ; T. OKUYAMA ; T. OOHASI.** *J. Mater. Sci.,* 1989, vol. 24, 2761-2764
- **N.N. REED ; K. D. JANDA.** Stealth Star Polymers: A New High-Loading Scaffold for Liquid-Phase Organic Synthesis. *Org. Lett.,* 2000, vol. 2, 1311-1313
- **VON IONESCU.** Chemistry and Technology of Polyols for Polyurethanes. *Rapra Technology Limited,* 2005
- Oligo-Polyols for Elastic Polyurethanes. 55 ff
- Polyester Polyols for Elastic Polyurethanes. 263 ff
- Polyether Polyols for Rigid Polyurethane Foams. 321 ff
- Polyester Polyols for Rigid Polyurethane Foams. 419 ff
- **VON G. OERTEL.** Kunststoff-Handbuch. Carl-Hanser-Verlag, 1993, vol. VII, 104-127
- **VON W. SIEFKEN.** *Justus Liebigs Annalen der Chemie,* Mai 1962, 75-136
- Kunststoff-Handbuch. Carl-Hanser-Verlag, 1993, vol. VII, 139-265
- **VON N. ADAM.** Ullmann's Encyclopedia of Industrial Chemistry. 2005